# EUROPEAN PATENT APPLICATION

(11) **EP 0 573 303 A1**
(43) Date of publication of application: **08.12.1993**
(21) Application number: 93304359.8
(22) Date of filing: 04.06.1993
(51) Int. Cl.: B01J 20/02, B01J 20/12, B01J 20/28, B01J 20/30, A01K 1/015, C09K 3/32, C02F 1/28, A01N 25/26

(54) **Granular fluid stabilizing sorbent**

(30) Priority: 05.06.1992 US 893716; 30.11.1992 US 982919
(71) Applicant: Barnes, Peter, Waterdown, Ontario LOR 2HO (CA)
(72) Inventor: Barnes, Peter, Waterdown, Ontario LOR 2HO (CA)
(74) Representative: Votier, Sidney David

(57) **Abstract**

A novel granular sorbent, suitable for a variety of uses including pet letter, industrial sorbent and as an agricultural chemical carrier is produced with a low cost particulate nucleus coated with a sorptive material that comprises only about 5% to 35% by volume of the total volume of the (granular) product. The nucleus of the granular product is made from low cost, common materials while the sorptive coating is preferably made from Fullers Earth of other sorptive clays.

## Description

### TECHNICAL FIELD

This invention is directed to a composite sorbent, and in particular to a granular sorbent having a nucleus with a sorbent coating; and to the method of production thereof.

### BACKGROUND ART

The use of sorbent clays for sorbing fluids is well known, having an extensive historical background and widespread application.

Deposits of sorbent minerals, which include those sorbent clays known as Fullers Earth, are remote. The cost of sorbent products from such deposits in many of the mass markets of North America is increased by the remote location of those deposits. In this age of conservation the efficient use of commodity products has become important. It is well known among those schooled in sorbent technology that only about 15% of the sorptive capacity of many commodity sorbent products is utilized before such products are discarded. Pet litter, whether of the traditional variety or the more recently introduced agglomerating or clumping variety, is frequently discarded before its sorptive capacity is fully utilized. These commodity products are expensive and may not be universally available, or affordable by all pet owners.

In addition to pet litter, other uses for sorbent clays include the taking-up of oil and all manners of spills and the retention of other liquids such as agricultural chemicals including pesticides and liquid fertilizers.

Additives may be combined with sorptive minerals to improve properties such as agglomerating, sorbtivity, odor control and the like, and many patents teach of such additives.

An example of such a patent that is directed to clays that form clumps, when wetted, for use as pet litter, is taught in U.S. Patent No. 4,129,094 Stockel.

Another example is U.S. Patent No . 4,925,826 Hamm et al, which teaches the use of a bloated perlite core having a coating of calcium sulphate.

### DISCLOSURE OF THE INVENTION

In accordance with the present invention it has been found that a coated nucleus, having a relatively thin sorbent outer covering can provide sorbency characteristics well suited to use of the product in containing or sorbing spilled fluids; as a carrier for agricultural chemicals; as pet litter; and for other similar and traditional uses for sorbents. The present invention teaches the manufacture of a sorbent wherein a particulate nucleus has an outer coating of a suitable sorbent mineral layer, which sorbent coating comprises from about 5% to 35% by volume of the product.

In the foregoing, the sorptive material is preferably a Fullers Earth mineral and includes but is not necessarily limited to a group of sorbent clays such as Bentonite, Taylorite, Sepiolite, Montmorillonite, Attapulgite, Palygorskite, Beidellite, Saponite, Hectorite, Nontronite and/or other smectites or combinations thereof, and may also include Diatomite, Kaolinite, Halloysite, Sericite, Zeolites and other sorptive minerals or combinations thereof and may include the acid activated counterpart to these minerals. Other sorbent substances include but are not limited to calcium sulfate dihydrate, cyclodextrin and other materials and water swellable and water sorbent polymers.

The use of a bonding agent such as adhesive polymers, fly ash, portland cement etc., or the use of soda ash or organic chemicals may serve to promote adhesive or gelling characteristics of the sorptive material, to facilitate coating the nucleus.

The nucleus may be selected from a range of low cost, locally available materials, including but not limited to such materials as limestone, dolomite, crushed stone, potash, granular fertilizer, perlite, slag, wood chips, shale, gypsum, ash, clay, cobs, seeds, nut-hulls, crushed brick, recycled paper and pulp mill waste products, light weight aggregate, vermiculite, plastics, and mixtures thereof.

As will be seen the present invention permits the use as a nucleus of used materials such as crushed brick, slag and wood chips as are specifically mentioned, above. It also diverts such materials from waste disposal. Clumping cat litter reduces cat litter waste disposal by 60% - 70% compared to traditional cat litter disposal.

Because the predominant material is comprised of common minerals or other common substances, and the volume of the sorbent material in relation to the overall volume of the finished product is greatly reduced, the products can be manufactured at low cost, near areas of high population density, and will not be dependent upon the proximity of sorbent clay deposits.

The cost of distributing the sorptive products or the present invention to the market place is greatly reduced as compared to conventional sorbent products.

A further advantage of the present invention is that it can utilize low cost, fine sorptive minerals, such as bag house dust or other lower valued finely ground sorptive mineral products.

In the case of a sorbent product in accordance with the present invention intended for uses requiring enhanced mechanical strength, the use of water in 10 to 15 percent by volume enhances the crushing strength and absorbency after drying.

It will be understood that the subject product when intended for pet litter or other sorptive uses, may readily incorporate perfume, deodorants, ammonia suppressants and the like.

The preferred sorptive material, comprises clay fines having a particle size significantly less than 50 microns. Sensibly one hundred percent of the clay particles will pass through a 325 mesh U.S. Standard Sieve size, giving a maximum particle size of 44 microns. The preferred average particle size will be in the range 10 to 30 microns.

As stated above the volume of sorptive materials used to coat the nucleus is in the range 5% to 35% of the volume of the product, and preferably 15% to 20% of the volume of the product.

The granular sorptive products of the present invention are manufactured by proportioning a predetermined volume of preferably dry sorptive material and dry particulate nucleus material, along with any required dry additives into a suitable machine for mixing, such as an Eirich Mixer or a Muller or Pug Mill. As dry mixing proceeds, water in an amount from 1% to 20% by volume of the total batch is added to promote coating of the sorptive material about the nucleus. The mixture continues to be worked until thorough mixing of the components has occurred and the particles forming the nucleus of the granules have been thoroughly coated by the sorptive material.

On completion of coating the product is discharged from the mixer and dried in a suitable, non- abrading drying apparatus. To disagglomerate the dried mixture is screened. The granular materials thus produced are screened to separate coarser, oversize material and to remove the fines, leaving a finished granular product of predetermined particle size range. Oversize and undersize material from the screening returned to reprocessing.

In the case of product intended for use as an industrial absorbent or for use with some agricultural chemicals the granules may be calcined to harden and improve the sorptive qualities of the product.

The surprising cost effectiveness of the product of this invention stems from the use of a small volume of sorbent material that is able to be applied to a relatively inexpensive but substantially higher volume of nucleous material.

The present invention thus provides a particulate fluid stabilizing medium for holding fluid, comprising a particulate nucleus coated with a sorptive material.

In a preferred embodiment the sorptive material comprises 10% to about 20% by volume of the product.

In one embodiment the particulate nucleus material may comprise substantially non-sorbent particles.

The present invention includes fluid stabilizing media in which the particles of sorptive material are self adherent to the nucleus or adhere to the nucleus by a bonding agent.

### BRIEF DESCRIPTION OF THE DRAWINGS

Certain embodiments of the invention, including the process of manufacture, are illustrated by way of example, reference being made to the accompanying drawings, wherein:
Figure 1 is a schematic illustration of various particles of the product in accordance with the present invention; and
Figure 2 is a schematic flow process for manufacturing the product.

### BEST MODE OF CARRYING OUT THE INVENTION

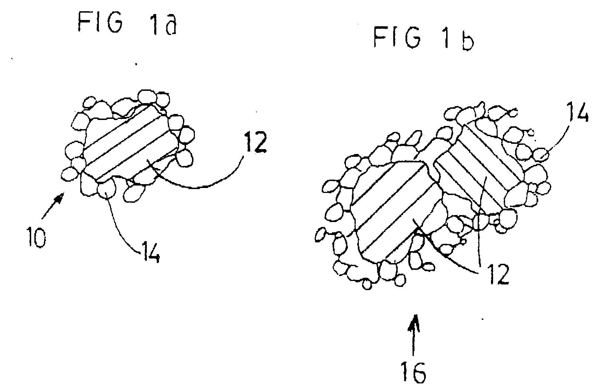

Referring first to Figures 1A and 1B, Figure 1A shows a granule 10 having a nucleus portion 12 with a layer 14 of sorbent material thereabout. In Figure 1B the oversize granule 16 comprises at least two nucleus portion 12 and a layer 14 of sorbent thereabout. Such oversize granules are generally separated in the screening step of the process and recycled.

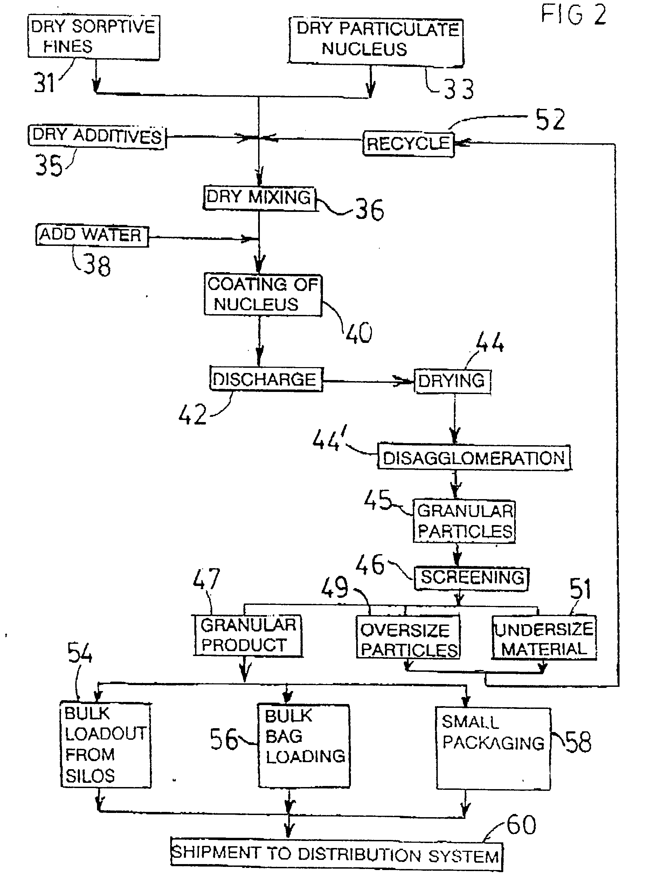

Referring to Figure 2 of the drawings, the process 30 according to the present invention can be either a batch or continuous process. In the process 30, dry sorptive fines 31 and dry particulate nucleus material 33, together with any dry additives 35 are subject to a dry mixing process step 36.

With the dry mixing completed, the step 39 takes place, water is added preferably by a fine spray while the mixing agitation is maintained so as to facilitate the coating of the nucleus material 33 with the sorptive fines 31. This process step 39 is maintained until the coating is achieved. The volume of water added during this step may range from 1 per cent to 20 per cent by volume . Suitable mixing apparatus which may be employed is an Eirich Mixer or a Muller or Pug Mill. The coated nucleus material is then subject to the step 42 of being discharged to the drying process step 44. This drying leads to a disagglomeration step 44, wherein the mass of coated material tends to disintegrate into granular particles 45, made up of individual granules, some oversized granules and some fine particulate material. The granular particles 45 pass to screening step 46.

The drying period will of course vary according to volume of water added and the temperature, The preferred temperature range is from 180°F to 300°F for cat litter applications. For other application such as petroleum based sorbents the temperature range is from 700°F to 1000°F.

The screening step 46 results in three classes of material, the desired granular product 47, in a desired size range; oversize particles 49, and undersize material consisting of both sorptive fines 31, particulate nucleus 33, dry additives 35 and mixtures thereof.

The oversize particles 49, together with the undersize material 51 is returned by way of recycle process step 52 to the dry feed, for recycling by dry mixing step 36.

The granular product 47 is transferred to silos as feed stock for process step 54 the bulk loadout from silos; as feed for bulk bag loading process 56, and as feed for small packaging process 58.

The products from these three processes then enters shipping system 60, for shipment to a distribution network.

### INDUSTRIAL APPLICATION

Large quantities of cat litter, industrial oil and grease sorbents and agricultural chemical sorptive granules are sold annually, for which the present invention is ideally suited.

## Claims

1. A particulate, fluid stabilizing medium for holding fluid, comprising a substantially dry particulate nucleus comprising 65 to 95% by volume of the medium, the particles thereof being coated with a particulate hygroscopic mineral sorptive material of water swellable fines comprising 5 to 35% by volume of the medium to hold said fluid.

2. The fluid stabilizing medium as set forth in Claim 1, wherein said sorptive material comprises 10% to about 20% by volume of said medium.

3. The fluid stabilizing medium as set forth in Claim 2, wherein said sorptive material is a particulate sorptive mineral, selected from the Fullers Earth group of minerals and other sorptive minerals and materials, and mixtures thereof.

4. The fluid stabilizing medium as set forth in Claim 2, wherein said sorptive material is selected in a size range from 40 mesh U.S. Standard Sieve size and smaller.

5. The fluid stabilizing medium as set forth in Claim 2, wherein said size range is from 100 mesh U.S. Standard Sieve designation, and smaller.

6. The fluid stabilizing medium as set forth in Claim 2, wherein said size range is from 200 mesh and smaller.

7. The fluid stabilizing medium as set forth in claim 1, wherein particles of said sorptive material are self adherent.

8. The fluid stabilizing medium as set forth in Claim 1, wherein particles of said sorptive material are adherent to said nucleus.

9. The fluid stabilizing medium as set forth in Claim 1, said particulate nucleus material comprising substantially non- sorbent particles.

10. The fluid stabilizing medium as set forth in claim 1, said particulate nucleus material being selected from the group comprising limestone, dolomite, crushed stone, potash, granular fertilizer, perlite, wood chips, slag, shale, gypsum, ash, clay, cobs, seeds, nut-hulls, crushed brick, recycled paper and pulp mill waste products, light weight aggregate, vermiculite, plastics, and mixtures thereof.

11. The fluid stabilizing medium as set forth in Claim 1, including a bonding agent to facilitate the manufacutre of said medium.

12. The fluid stabilizing medium, as set forth in Claim 11, said bonding agent being selected fro the group consisting of adhesive polymers, soda ash and mixtures thereof.

13. The fluid stabilizing medium as set forth in Claim 11, wherein said bonding agent enhances the gelling characteristics of said sorptive material.

14. A fluid stabilizing medium for pet litter comprising the medium of Claim 1.

15. A fluid stabilizing medium as an industrial sorbent vehicle comprising the medium of Claim 1.

16. A fluid stabilizing medium as an agricultural sorbent vehicle comprising the medium of Claim 1.

17. The process for manufacturing a particulate, fluid stabilizing product which comprises:
dry mixing a particulate nucleus with dry, fluid sorptive coating material in the range 2% to 35% by volume of the final product;
wetting the mixture to a degree sufficient to promote coating of said particulate nucleus with said sorptive coating material; and drying said mixture to produce segregated particles.

18. The process as set forth in Claim 17, including the step of introducing an agricultural chemical therewith, selected from pesticides, fertilizers and combinations thereof.

19. The process as set forth in Claim 17, including the step of introducing seeds as a component of said product.

20. The fluid stabilizing medium as set forth in Claim 17, including agricultural chemicals selected from pesticides, fertilizers and combinations thereof.

21. The fluid stabilizing medium as set forth in Claim 17, including seeds.
